# EUROPEAN PATENT APPLICATION

(11) **EP 4 795 994 A1**
(43) Date of publication of application: **26.08.2026**
(21) Application number: 26158403.1
(22) Date of filing: 13.02.2026
(51) Int. Cl.: A47L 1/02

(54) **WINDOW CLEANING APPARATUS**

(30) Priority: 17.02.2025 KR 20250020228
(71) Applicant: LG Electronics Inc., Yeongdeungpo-gu Seoul 07336 (KR)
(72) Inventor: LEE, Jeongah, Seoul (KR); PARK, Janghee, Seoul (KR); YOON, Heesang, Seoul (KR); KEE, Hyunshin, Seoul (KR); KANG, Chanyoung, Seoul (KR)
(74) Representative: Schott, Jakob Valentin

(57) **Abstract**

The present disclosure relates to a window cleaning apparatus, and a window cleaning apparatus according to an embodiment of the present disclosure includes a cleaning module configured to clean a window, a lower case accommodating the cleaning module and having an opening formed at an upper side thereof, an upper case including an inner cover disposed above the lower case to cover the opening, and an outer cover disposed above the inner cover to cover the inner cover, and a solar panel disposed on an upper surface of the outer cover and configured to generate electric power using sunlight, in which the outer cover is rotatably connected to one side of the inner cover.

## Description

### CROSS-REFERENCE TO RELATED APPLICATION

This application claims the priority benefit of Korean Patent Application No. 10-2025-0020228, filed on February 17, 2025, the disclosures of which is incorporated herein by reference.

### BACKGROUND OF THE INVENTION

### Field of the invention

The present disclosure relates to a window cleaning apparatus, and more particularly, to a window cleaning apparatus that generates electric power.

### Description of the Related Art

As modern buildings become taller and the area of glass windows increases, the importance of window maintenance and cleaning is becoming more and more important.

Glass windows installed on the exterior walls of buildings can easily become contaminated by external dust, rain, and pollutants. This contamination can cause various problems, such as deteriorating the building's appearance, obstructing residents' views, and reducing lighting.

To address this issue, various window cleaning apparatuses have been developed. Korean Patent No. 10-2637716 discloses a rail-type window cleaner. The window cleaner moves along a rail to clean windows, and operates without an external power supply using a battery.

However, the window cleaner does not disclose a method for charging the battery, and the window cleaner may be difficult to charge the battery when the window cleaner is disposed in an outdoor environment, such as on the exterior wall of a high-rise building.

This may increase the user's maintenance costs and reduce work efficiency.

Meanwhile, there have been attempts to generate electric power through solar panels in devices other than window cleaning apparatuses, but no such attempts have been made in window cleaning apparatuses.

This may be because, due to the nature of window cleaning apparatuses being disposed outdoors, solar panels are easily exposed to external contamination, making it difficult to generate electric power efficiently.

Additionally, due to the nature of the window cleaning apparatus being disposed on one side of the window, the electric power generation efficiency may fluctuate greatly depending on the change in the sun's altitude.

To efficiently generate electric power through solar panels, it is important to keep the surface of the solar panels clean.

However, for window cleaning apparatuses that operate in outdoor environments, there is a problem that solar panels are not easy to clean.

Meanwhile, to improve the efficiency of electric power generation through the solar panel, the angle of the solar panel should be adjusted to match the altitude of the sun.

However, this requires complex calculations, and has the problem of difficulty in adjusting the angle appropriately because the sun's incident angle changes from an acute angle to a right angle and then back to an acute angle again depending on the sun's altitude.

### SUMMARY OF THE INVENTION

An object of the present disclosure is to provide a window cleaning apparatus that can solve various problems of the above-described conventional technologies.

Another object of the present disclosure is to provide a window cleaning apparatus that can easily clean a solar panel from indoors.

Still another object of the present disclosure is to provide a window cleaning apparatus capable of easily controlling the angle of a case in which a solar panel is disposed.

Still another object of the present disclosure is to provide a window cleaning apparatus in which a case in which a solar panel is disposed rotates stably.

Still another object of the present disclosure is to provide a window cleaning apparatus in which an incident angle of the sun on a solar panel is maintained even when the altitude of the sun changes.

Still another object of the present disclosure is to provide a window cleaning apparatus that can efficiently generate electric power through a solar panel even when the altitude of the sun changes.

Still another object of the present disclosure is to provide a window cleaning apparatus that can clean a window without interference even when a solar panel rotates.

Objects of the present disclosure are not limited to the objects mentioned above, and other objects not mentioned will be clearly understood by those skilled in the art from the description below.

In order to achieve the above-described objects, a window cleaning apparatus according to an embodiment of the present disclosure includes a cleaning module configured to clean a window, and a lower case accommodating the cleaning module and the battery and having an opening formed on an upper side thereof.

The window cleaning apparatus includes an upper case including an inner cover disposed above the lower case to cover the opening and an outer cover disposed above the inner cover to cover the inner cover, and a solar panel disposed on an upper surface of the outer cover and configured to generate electric power using sunlight.

The outer cover is rotatably connected to one side of the inner cover.

The outer cover may be connected to one side of the inner cover so as to be rotatable between a first position in which the outer cover covers the inner cover and a second position in which an upper surface of the solar panel is disposed to face an indoor space at a front side.

The window cleaning apparatus may further include a motor mounted on the inner cover, and a link having one end connected to a rotating shaft of the motor and the other end connected to a lower surface of the outer cover.

The outer cover may rotate between the first position and the second position in accordance with the rotation of the motor.

A front end of the outer cover may be connected to a front end of the inner cover by a pair of hinges, and the pair of hinges may be spaced apart from each other in a left-right direction by a predetermined distance.

The motor and the link may be disposed between the pair of hinges.

The window cleaning apparatus may further include a motor mounted on the inner cover, a link having one end connected to the rotating shaft of the motor and the other end connected to a lower surface of the outer cover, a sensor configured to receive a signal transmitted from a user in an indoor space, and a control unit electrically connected to the sensor and the motor.

The control unit may control the operation of the motor in response to a signal received from the sensor.

The window cleaning apparatus may further include a motor mounted on the inner cover, a first link fixed to a rotating shaft of the motor, and a second link rotatably connected to the first link and fixed to a lower surface of the outer cover.

A length of the first link may be equal to or less than a length of the second link.

The inner cover forms a link hole through which at least one of the first link or the second link passes when the outer cover is disposed to cover an upper surface of the inner cover.

The inner cover may form a motor cover that protrudes upward to correspond to the shape of the motor, and the motor may be mounted below the motor cover.

The inner cover may be rotatably connected to one side of the lower case so that the opening of the lower case is opened and closed.

The rotating shaft of the inner cover may be disposed parallel to the rotating shaft of the outer cover.

A lower surface of the outer cover may form a curved surface, an upper surface of the inner cover may form a curved surface corresponding to the lower surface, and the lower surface of the outer cover may be in close contact with the upper surface of the inner cover when the outer cover is disposed to cover the upper surface of the inner cover.

In order to achieve the above-described objects, a window cleaning apparatus according to an embodiment of the present disclosure includes a cleaning module configured to clean a window, a lower case accommodating the cleaning module and having an opening formed at an upper side thereof, an outer cover disposed above the lower case to cover the opening and rotatably connected to the lower case, and a solar panel disposed on an upper surface of the outer cover and configured to generate electric power using sunlight.

The window cleaning apparatus may further include a motor for rotating the outer cover and an illuminance sensor disposed on one side of the solar panel and configured to measure a level of contamination of the solar panel through the intensity of sunlight.

The window cleaning apparatus may further include a display disposed on a front surface of the lower case and configured to display the level of contamination of the solar panel.

In order to achieve the above-described objects, a window cleaning apparatus according to an embodiment of the present disclosure includes an outer cover, a lower case disposed below the outer cover and rotatably connected to the outer cover, and a motor for rotating the outer cover.

The window cleaning apparatus includes a first solar panel disposed on an upper surface of the outer cover, a first illuminance sensor disposed on one side of the first solar panel, and a second illuminance sensor disposed on an upper surface of the outer cover and forming a predetermined angle with the first illuminance sensor.

The window cleaning apparatus may further include a second solar panel disposed on the upper surface of the outer cover and located below the first solar panel, and the second illuminance sensor may be disposed on one side of the second solar panel.

An area of the first solar panel and an area of the second solar panel may be the same.

A plurality of the first solar panel and a plurality of the second solar panel may be disposed in a left-right direction.

The first illuminance sensor may be disposed on one side of a first solar panel located in the center among the plurality of first solar panels, and the second illuminance sensor may be disposed on one side of a second solar panel located in the center among the plurality of second solar panels.

The window cleaning apparatus may further include a display that displays the intensity of sunlight measured by the first illuminance sensor or the second illuminance sensor.

The window cleaning apparatus may further include a cleaning module that is disposed on one side of the lower case and cleans the window, and the cleaning module may be electrically connected to the first solar panel and operate through electric power generated from the first solar panel.

The cleaning module may be disposed on one side of a first surface of the lower case facing the window so as not to interfere with rotation of the outer cover.

The window cleaning apparatus may further include an inner cover disposed below the outer cover and configured to protect an upper portion of the lower case.

In order to achieve the above-described objects, a window cleaning apparatus according to an embodiment of the present disclosure includes an outer cover including a first plate and a second plate forming a predetermined angle with the first plate, and an inner cover disposed below the outer cover, the outer cover being rotatably connected to the inner cover.

The window cleaning apparatus includes a motor that rotates the outer cover to adjust the angle with respect to the inner cover, a first solar panel disposed on an upper surface of the first plate, a first illuminance sensor disposed on the upper surface of the first plate and on one side of the first solar panel, and a second illuminance sensor disposed on the upper surface of the second plate.

The outer cover is rotated so that the incident angle of the sun on the first solar panel is maintained by comparing the intensity of sunlight measured by the first illuminance sensor and the second illuminance sensor.

The window cleaning apparatus may further include a second solar panel disposed on the upper surface of the second plate and disposed on one side of the second illuminance sensor, and the outer cover may be rotated so that the intensities of sunlight measured by the first illuminance sensor and the second illuminance sensor becomes equal.

When the outer cover is disposed to cover the upper surface of the inner cover, the second plate may be disposed lower than the first plate, and an angle between the first plate and the second plate may be 120° or more and less than 180°.

A front end of the outer cover may be connected to a front end of the inner cover by a hinge, and the rotating shaft of the hinge may be disposed in the left-right direction.

The outer cover may be formed so that the lower surfaces of the first plate and the second plate are connected in a curved manner.

In order to achieve the above-described objects, a method for controlling a window cleaning apparatus according to an embodiment of the present disclosure includes, at a first time point, a step of measuring the intensity of sunlight by a first illuminance sensor disposed on one side of a first solar panel and a second illuminance sensor disposed on one side of a second solar panel disposed to be inclined with respect to the first solar panel.

The method for controlling a window cleaning apparatus includes a step of rotating an outer cover on which the first solar panel and the second solar panel are disposed in a first direction or a second direction by a set angle based on values measured by the first illuminance sensor and the second illuminance sensor.

The method for controlling a window cleaning apparatus may include, after the step of measuring the intensity of sunlight at the first time point, a step of measuring the intensity of sunlight by the first illuminance sensor and the second illuminance sensor at the second time point.

The control method of the window cleaning apparatus may further include a step of determining whether to rotate the outer cover based on the intensity of sunlight measured at the first time point and the intensity of sunlight measured at the second time point.

The control method of the window cleaning apparatus may further include, after the step of rotating the outer cover, a step of determining whether the outer cover has reached a limit point at which the outer cover can rotate in the first direction or the second direction, and stopping the rotation of the outer cover.

Specific details of other embodiments are included in the detailed description and drawings.

According to the window cleaning apparatus of the present disclosure, one or more of the following effects are achieved.

The solar panel is disposed on the upper surface of the outer cover, and the outer cover can be rotated so that the upper surface of the solar panel faces the indoor space at the front, so that the solar panel can be easily cleaned from indoors.

The motor is mounted on the inner cover and the link is connected to the outer cover, so that the angle of the outer cover where the solar panel is disposed can be easily controlled.

The front ends of the outer cover and the inner cover are connected by a pair of hinges, and a motor and a link are disposed between the pair of hinges, so that the outer cover on which the solar panel is disposed can rotate stably.

Effects of the present disclosure are not limited to the effects mentioned above, and other effects not mentioned will be clearly understood by those skilled in the art from the description of the claims.

### BRIEF DESCRIPTION OF THE DRAWINGS

FIG. 1 illustrates a state in which a window cleaning apparatus according to one embodiment of the present disclosure is coupled to a window frame.
FIG. 2 is a perspective view of a window cleaning apparatus according to one embodiment of the present disclosure.
FIG. 3 is a rear perspective view of a main body according to one embodiment of the present disclosure.
FIG. 4 is a front perspective view of a main body according to one embodiment of the present disclosure.
FIGS. 5A to 5C are views illustrating the rotation of an outer cover and an inner cover according to one embodiment of the present disclosure.
FIG. 6 is a view illustrating a rotation structure of the outer cover according to one embodiment of the present disclosure.
FIG. 7 is a view illustrating the outer cover according to one embodiment of the present disclosure rotated toward the indoor space.
FIGS. 8A to 8D are diagrams illustrating how an angle between a solar panel and sunlight changes over time according to one embodiment of the present disclosure.
FIG. 9 is a flowchart illustrating a method for rotating the outer cover according to the intensity of sunlight according to one embodiment of the present disclosure.

### DETAILED DESCRIPTION

Hereinafter, embodiments disclosed in the present specification will be described in detail with reference to the attached drawings. Regardless of the drawing numbers, identical or similar components are given the same reference numbers and redundant descriptions thereof will be omitted.

The suffixes "module" and "unit" used for components in the following description are given or used interchangeably only for the convenience of writing specifications, and do not have distinct meanings or roles in themselves.

In addition, when describing the embodiments disclosed in the present specification, if it is determined that a detailed description of a related known technology may obscure the gist of the embodiments disclosed in the present specification, the detailed description thereof will be omitted. In addition, the attached drawings are only intended to facilitate easy understanding of the embodiments disclosed in the present specification, and the technical ideas disclosed in the present specification are not limited by the attached drawings, and should be understood to include all modifications, equivalents, and substitutes included in the spirit and technical scope of the present disclosure.

Terms that include ordinal numbers, such as first, second, or the like, may be used to describe various components, but the components are not limited by these terms. These terms are used solely to distinguish one component from another.

When a component is referred to as being "connected" or "coupled" to another component, it should be understood that it may be directly connected or coupled to that other component, but that there may be other components intervening. Conversely, when a component is referred to as being "directly connected" or "directly coupled" to another component, it should be understood that there are no other components intervening.

Singular expressions include plural expressions unless the context clearly dictates otherwise.

In the present disclosure, terms such as "include" or "have" are intended to specify the presence of a feature, number, step, operation, component, part or combination thereof described in the specification, but should be understood not to exclude in advance the possibility of the presence or addition of one or more other features, numbers, steps, operations, components, parts or combinations thereof.

The directions of front F and rear R illustrated in the drawing are for convenience of explanation only, and the technical ideas disclosed in the present specification are not limited thereby.

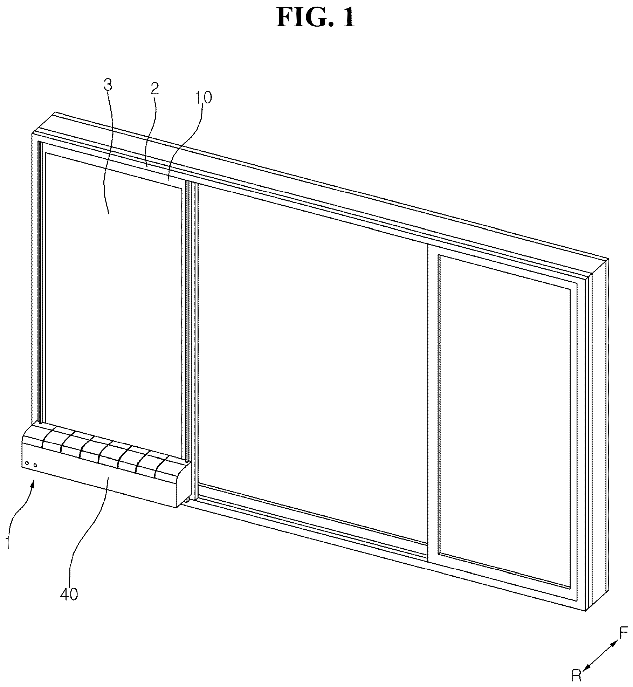

Referring to FIG. 1, a window cleaning apparatus 1 according to one embodiment of the present disclosure, which is disposed on a window frame 2, is illustrated. The window cleaning apparatus 1 may clean an outdoor-side window 3. The window cleaning apparatus 1 may include a main body 40 and a frame 10.

The main body 40 may clean the window 3. The main body 40 may be connected to the frame 10 and may move up and down along the frame 10. The main body 40 may move the frame 10 left and right of the window frame 2.

Accordingly, the window cleaning apparatus 1 can clean a wide window 3 or multiple windows 3 disposed on one window frame 2 with a single device.

The frame 10 may be disposed on the window frame 2. The frame 10 may have the same specifications as the insect screen typically disposed on the window frame 2. This allows the window cleaning apparatus 1 to be easily installed instead of the insect screen in most places.

Meanwhile, the window cleaning apparatus 1 may be manufactured in various sizes to suit the size of the window 3 and the shape of the window frame 2.

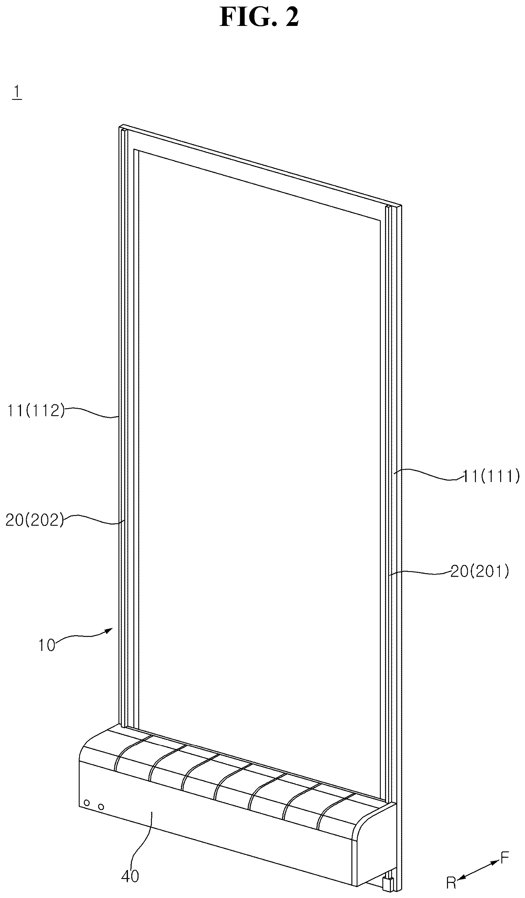

Referring to FIG. 2, the configuration of the window cleaning apparatus 1 according to one embodiment of the present disclosure is illustrated.

The frame 10 may include a side frame 11 extending in the up-down direction. The frame 10 may include a first side frame 111 and a second side frame 112.

The first side frame 111 may be extended in the up-down direction. The second side frame 112 may be spaced apart from the first side frame 111 and extended in the up-down direction.

For example, as illustrated in the drawing, the first side frame 111 may extend in the up-down direction on the right side of the frame 10, and the second side frame 112 may extend in the up-down direction on the left side of the frame 10.

The rail 20 may be fixed to the frame 10 in the up-down direction. The rail 20 may be disposed on the side frame 11 in the up-down direction. The rail 20 may provide a movement path so that the main body 40 can move up and down. The rail 20 may include a first rail 201 and a second rail 202.

For example, the first rail 201 may be disposed on the first side frame 111 in the up-down direction, and the second rail 202 may be disposed on the second side frame 112 in the up-down direction.

Due to this, up-down paths may be formed on both sides of the frame 10, and the main body 40 may move up and down along the rails 20 to clean the window.

A left-right width of the main body 40 may be equal to or less than a left-right width of the frame 10. Accordingly, even when the main body 40 moves up and down along the frame 10, the main body 40 may not collide with other objects, and the window may be cleaned from the inside of the frame 10.

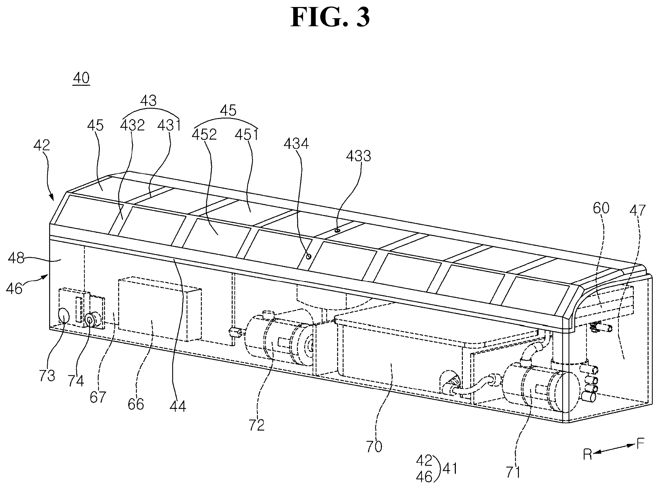

Referring to FIG. 3, the main body 40 and an internal configuration thereof of the window cleaning apparatus 1 according to one embodiment of the present disclosure are illustrated.

The main body 40 may include a housing 41. The housing 41 forms the exterior of the main body 40 and may form an internal space for accommodating various components. The housing 41 may include an upper case 42 and a lower case 46.

The upper case 42 may constitute the upper portion of the housing 41. The upper case 42 is disposed above the lower case 46 to prevent dust, moisture, or the like from penetrating into the housing 41.

The upper case 42 may include an outer cover 43 and an inner cover 44. The outer cover 43 may be disposed at the uppermost side of the upper case 42, and the inner cover 44 may be disposed below the outer cover 43. As a result, the penetration of dust, moisture, or the like into the interior of the housing 41 may be prevented in a double manner.

The outer cover 43 may include a first plate 431 and a second plate 432. The first plate 431 and the second plate 432 may be connected to form a predetermined angle. The first plate 431 may be disposed above the second plate 432.

For example, when the upper case 42 is disposed on the upper side of the lower case 46 to shield the internal space of the housing 41 as illustrated in the drawing, the first plate 431 may be disposed to form a predetermined angle with the ground. The second plate 432 may be disposed on one side of the first plate 431 to be inclined toward the ground relative to the first plate 431.

Accordingly, even when foreign substances such as water or snow fall from the upper side of the outer cover 43, the foreign substances may easily fall due to the inclination of the first plate 431 and the second plate 432.

Meanwhile, the first plate 431 may be disposed in a direction parallel to the ground, and the second plate 432 may be disposed to be inclined with respect to the ground on one side of the first plate 431.

A solar panel 45 may be disposed on the upper surface of the outer cover 43. The solar panel 45 may generate electricity through sunlight. The solar panel 45 may transmit the generated electric power to a battery 66 to be described later.

Accordingly, the window cleaning apparatus 1 may receive energy from the sun to operate even without external electric power.

A plurality of solar panels 45 may be disposed on the upper surface of the outer cover 43. The solar panels 45 may include a first solar panel 451 and a second solar panel 452. The plurality of solar panels 45 may be disposed separately on the first plate 431 and the second plate 432.

For example, a plurality of first solar panels 451 may be disposed on the first plate 431, and a plurality of second solar panels 452 may be disposed on the second plate 432.

The plurality of first solar panels 451 may be disposed on the first plate 431 in the left-right direction. The plurality of second solar panels 452 may be disposed on the second plate 432 in the left-right direction.

In this case, the total area of the solar panel 45 disposed on the outer cover 43 increases, so the amount of electric power generated from the sun may increase.

The number of the first solar panels 451 and the number of second solar panels 452 may be the same. The area of the first solar panel 451 and the area of the second solar panel 452 may be the same. In this case, the electric power may be generated evenly from the first solar panel 451 and the second solar panel 452.

The first plate 431 and the second plate 432 form a predetermined angle, so that the incidence angles of the sunlight on the first solar panel 451 and the second solar panel 452 disposed on the first plate 431 and the second plate 432 may be different.

Therefore, even when the solar panel 45 disposed on either the first plate 431 or the second plate 432 does not receive enough sunlight, the remaining solar panel 45 may easily generate electric power.

A first illuminance sensor 433 and a second illuminance sensor 434 may detect light. The first illuminance sensor 433 and the second illuminance sensor 434 may be disposed on the upper surface of the outer cover 43.

The first illuminance sensor 433 may be disposed on the first plate 431. The first illuminance sensor 433 may be disposed at the center of the first plate 431. The first illuminance sensor 433 may be disposed on one side of the first solar panel 451. Accordingly, the first illuminance sensor 433 may measure the intensity of sunlight received by the first solar panel 451.

The second illuminance sensor 434 may be disposed on the second plate 432. The second illuminance sensor 434 may be disposed at the center of the second plate 432. The second illuminance sensor 434 may be disposed on one side of the second solar panel 452. Accordingly, the second illuminance sensor 434 may measure the intensity of sunlight received by the second solar panel 452.

The first illuminance sensor 433 may be disposed on one side of the first solar panel 451 located in the center among the plurality of first solar panels 451. The second illuminance sensor 434 may be disposed on one side of the second solar panel 452 located in the center among the plurality of second solar panels 452.

Among the plurality of solar panels 45, the solar panel 45 located in the center is the least susceptible to external environmental changes such as shadows, so each of the illuminance sensors 433 and 434 is disposed on one side thereof to efficiently measure the intensity of sunlight.

The illuminance sensors 433 and 434 may be connected to a main board 67 described later. The main body 40 may operate according to information detected by the illuminance sensors 433 and 434.

For example, light may be detected by the illuminance sensors 433 and 434 of the main body 40 after cleaning. In this case, the main board 67 may move the main body 40 up and down so that the solar panel 45 may receive more light.

Accordingly, the solar panel 45 may receive more light and generate more electric power than before moving.

For example, when the surfaces of the illuminance sensors 433 and 434 are contaminated with the solar panel 45, sunlight may not be detected by the illuminance sensors 433 and 434 for a long period of time.

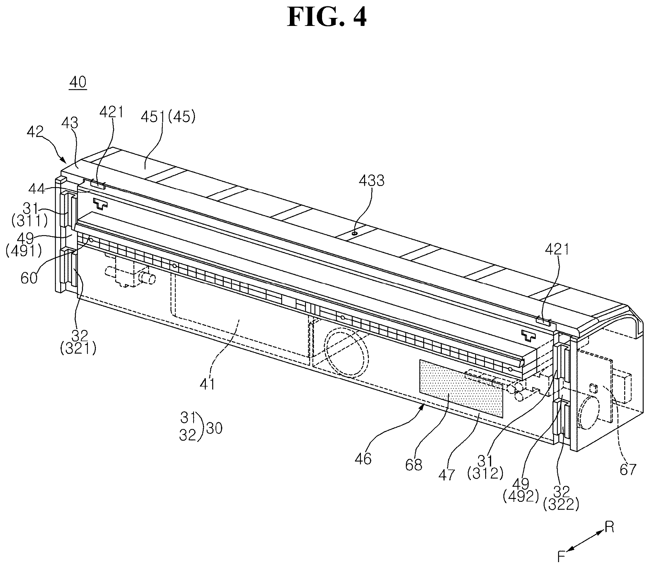

In this case, the control unit 67 may display instructions, the level of contamination, and the intensity of sunlight measured by the first illuminance sensor 433 or the second illuminance sensor 434 on a display 68 (see FIG. 4) to instruct the user to clean the solar panel 45.

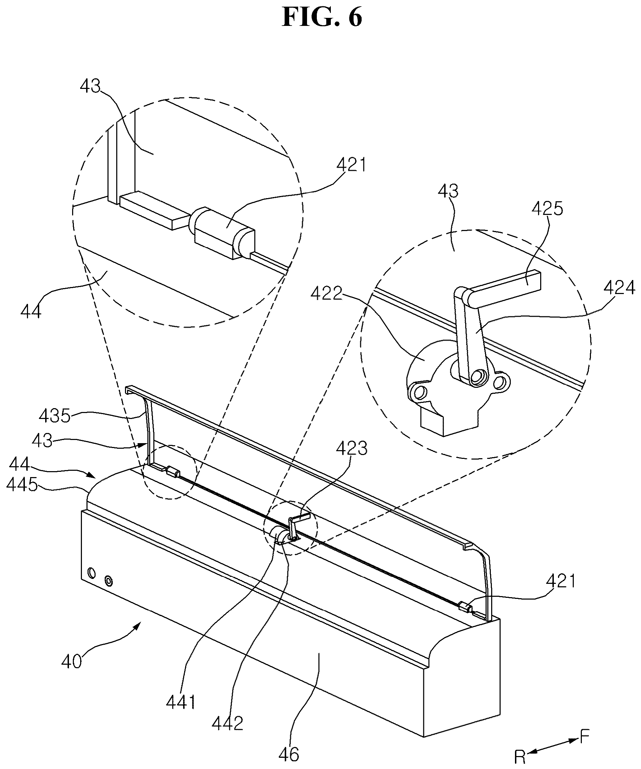

In addition, the operation of a motor 422 (see FIG. 6) may be controlled so that the upper surface of the outer cover 43 faces the indoor space according to the intensity of sunlight measured by the illuminance sensors 433 and 434, thereby notifying the user in the indoor space that the solar panel 45 needs to be cleaned.

The predetermined angle formed by the first plate 431 and the second plate 432 may be greater than or equal to 120° and less than 180°. Accordingly, the predetermined angle formed by the first solar panel 451 and the second solar panel 452 may also be greater than or equal to 120° and less than 180°.

At the angle, the incident angles of the sunlight on the first illuminance sensor 433 and the second illuminance sensor 434 are different, so that the direction in which a direction in which rotation is required to reduce the incident angle can be determined. At the same time, at the angle, the first solar panel 451 and the second solar panel 452 may receive sunlight relatively evenly and generate electric power in a complementary manner.

Meanwhile, the upper end portion of the outer cover 43 may have a shape corresponding to that of the solar panel 45. As a result, even when the solar panel 45 is disposed on the upper surface of the outer cover 43, the solar panel 45 may not protrude from the outer cover 43, and an integrated appearance may be formed.

The lower case 46 may constitute the lower portion of the housing 41. The lower case 46 is disposed below the upper case 42 and has an opening formed on the upper side, thereby forming a space for accommodating various components such as a cleaning module 60, a cleaning liquid tank 70, a battery 66, and the main board 67.

The lower case 46 may include a first surface 47 facing the window and a second surface 48 positioned opposite the first surface 47. The first surface 47 and the second surface 48 may be disposed in a direction intersecting the ground. This allows water formed on the surface of the main body 40 to easily fall to the ground.

The battery 66 may be disposed inside the housing 41. The battery 66 may be disposed inside the lower case 46.

The battery 66 may be connected to the cleaning module 60 or the main board 67 described later to provide electric power required for the main body 40 to move up and down or perform cleaning.

The battery 66 may be connected to the solar panel 45. This allows the electric power generated by the solar panel 45 to be stored in the battery 66. Due to the battery 66 and the solar panel 45, the window cleaning apparatus 1 may operate even without even without being supplied with electric power from indoors. Therefore, the window cleaning apparatus 1 may operate in an environmentally friendly and economical manner.

Meanwhile, the window cleaning apparatus 1 may also be operated by receiving electric power from indoors.

The main board 67 may be disposed inside the housing 41. The main board 67 may distribute power to each component of the main body 40. The main board 67 may control the operation of each component according to a signal input by the user or built-in logic. The main board 67 may be referred to as a control unit 67.

The cleaning module 60 may be disposed inside the housing 41. The cleaning module 60 may clean the window. The cleaning module 60 may spray a cleaning liquid to clean the window and recover the used cleaning liquid.

The cleaning liquid tank 70 may be disposed below the cleaning module 60. The cleaning liquid tank 70 may store the cleaning liquid used by the cleaning module 60 when cleaning the window.

A first pump 71 may connect the cleaning liquid tank 70 and the cleaning module 60. The first pump 71 may supply the cleaning liquid from the cleaning liquid tank 70 to the cleaning module 60. The cleaning module 60 may spray highpressure cleaning liquid onto the window by the first pump 71.

The second pump 72 may be connected to the cleaning module 60. The second pump 72 may collect the cleaning liquid recovered from the cleaning module 60.

The window cleaning apparatus 1 may spray and recover the cleaning liquid by using the first pump 71 and the second pump 72, and may prevent the cleaned window and the surrounding window frame from being contaminated with the cleaning liquid.

A temperature sensor 73 and a humidity sensor 74 may be disposed inside the housing 41. The temperature sensor 73 and the humidity sensor 74 may be disposed on the second surface 48. Therefore, the temperature sensor 73 and the humidity sensor 74 may easily detect information on the external environment.

The temperature sensor 73 may detect temperature. The temperature sensor 73 may be connected to the main board 67. The main body 40 may operate according to information detected by the temperature sensor 73.

For example, when the outside temperature detected by the temperature sensor 73 is 0°C or lower, the main body 40 may not perform window cleaning to prevent the cleaning liquid from freezing.

The humidity sensor 74 may detect the humidity of the outside air. The humidity sensor 74 may be connected to the main board 67. The main body 40 may operate according to the information detected by the humidity sensor 74.

For example, when the external humidity is high, dew may form on the window surface, causing the window to become contaminated. Therefore, when the humidity sensor 74 detects humidity above a certain level, the main body 40 may perform window cleaning.

A sensor (not illustrated) may be disposed inside the lower case. The sensor may receive a signal transmitted from the user in the indoor space. The sensor may be electrically connected to the control unit.

Accordingly, the signal transmitted by the user in the indoor space may be received by the sensor and transmitted to the control unit. The control unit may control the operation of the motor 422 (see FIG. 6) to adjust the angle of the outer cover.

Referring to FIG. 4, a view of the main body 40 according to one embodiment of the present disclosure as seen from the indoor space is illustrated.

The cleaning module 60 may be disposed on one side of the first surface 47. The cleaning module 60 may be disposed on one side of the first surface 47 so as to perform cleaning without interfering with the rotation of the outer cover 43 or the solar panel 45. The rotation of the outer cover 43 is described in detail in FIG. 6.

The cleaning module 60 may be positioned to penetrate the first surface 47. A portion of the cleaning module 60 may protrude forward from the first surface 47. Accordingly, when the main body 40 moves up and down, the cleaning module 60 may come into contact with the window and perform cleaning.

A case groove 49 may be formed on the first surface 47. The case groove 49 may be formed to be recessed toward the rear from one side of the first surface 47 so that the rail 20 may be disposed. The case groove 49 may be formed concavely by recessing portions of both sides of the first surface 47 toward the second surface 48.

The case groove 49 may be a space where a mover 30 connected to the rail 20 (see FIG. 2) is disposed.

The case groove 49 may include a first case groove 491 and a second case groove 492 formed on both sides of the first surface 47. For example, the first case groove 491 may be formed on the left side of the first surface 47 in the drawings, and the second case groove 492 may be formed on the right side of the first surface 47 in the drawings.

The mover 30 may be disposed in the case groove 49. The mover 30 may be coupled to the main body 40 in the case groove 49. The mover 30 may be connected to the rail 20 to guide the up and down movement of the main body 40.

The mover 30 may include an upper mover 31 disposed on the upper side of the case groove 49 and a lower mover 32 disposed on the lower side thereof.

For example, the first upper mover 311 may be coupled to the upper side of the first case groove 491, and the first lower mover 321 may be coupled to the lower side of the first case groove 491. The second upper mover 312 may be coupled to the upper side of the second case groove 492, and the second lower mover 322 may be coupled to the lower side of the second case groove 492.

The main body 40 may be stably connected to the rail 20 by the upper mover 31 and the lower mover 32. For example, the load of the main body 40 may be distributed by the upper mover 31 and the lower mover 32.

As a result, the load applied to the mover 30 and the rail 20 may be reduced compared to when a single mover 30 is used, and the durability of the mover 30 and the rail 20 may be increased.

In addition, as the upper mover 31 and the lower mover 32 are disposed in the up-down direction, the moment applied to the mover 30 by the main body 40 may be distributed. As a result, friction generated during the up-down movement of the main body 40 is reduced, and the main body 40 may move more stably in the up-down direction.

The display 68 may be disposed on the first surface. The display 68 may be disposed below the cleaning module 60. The display 68 may provide information on the window cleaning apparatus 1 to the user in the indoor space.

For example, the display 68 may display information such as temperature, humidity, remaining battery level, and a remaining amount of cleaning liquid.

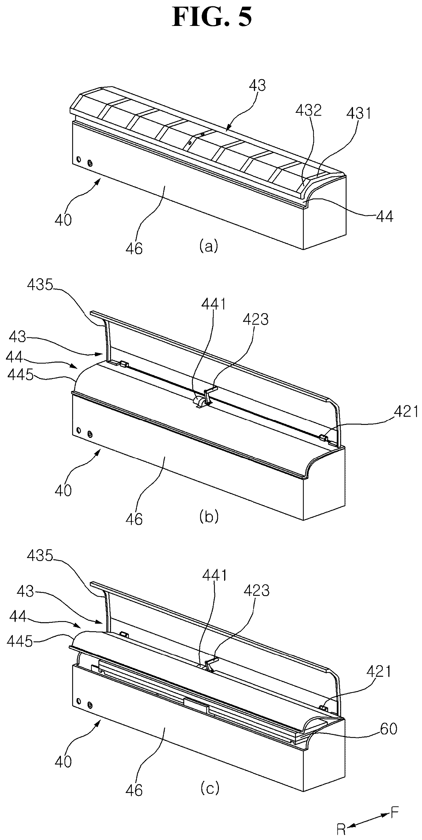

Referring to FIGS. 5A to 5C, the rotation of the outer cover 43 and inner cover 44 is illustrated.

FIG. 5A illustrates a state in which the outer cover 43 is rotated to form a predetermined angle with respect to the inner cover 44. FIG. 5B illustrates a state in which the upper surface of the outer cover 43 is rotated forward. FIG. 5C illustrates a state in which the inner cover 44 is rotated at a predetermined angle so that the internal space of the lower case 46 is opened.

The outer cover 43 may be rotatably connected to one side of the inner cover 44. The outer cover 43 may be rotated between a first position in which the outer cover 43 covers the upper surface of the inner cover 44 and a second position in which the upper surface of the solar panel 45 is disposed toward the indoor space at the front.

Meanwhile, the outer cover 43 may be rotatably connected to one side of the lower case 46.

The outer cover 43 and the inner cover 44 may be connected by a hinge 421. The hinge 421 may connect the front end of the outer cover 43 and the front end of the inner cover 44. As a result, the upper surface of the outer cover 43 may be rotated so as to face forward.

Hereinafter, the direction in which the upper surface of the outer cover 43 is rotated so as to face forward, that is, the direction in which the outer cover 43 rotates from the state of FIG. 5A to the state of FIG. 5B, is referred to as the first direction. The direction in which the outer cover 43 rotates from the state of FIG. 5B to the state of FIG. 5A is referred to as the second direction.

Various effects may occur as the outer cover 43 can rotate in the first direction or the second direction.

For example, as the altitude of the sun changes, the angle of sunlight incident on the solar panel 45 may change. In this case, the outer cover 43 may rotate to reduce the angle of sunlight incident on the solar panel 45, thereby maximizing electric power generation efficiency.

For another example, the solar panel 45 may become contaminated by the external environment. The cleaner the surface of the solar panel 45, the more efficient it is at generating electric power by receiving sunlight. Therefore, the outer cover 43 may be rotated in the first direction to easily clean the surface from indoors.

The inner cover 44 may be disposed above the lower case 46. The inner cover 44 may cover an opening formed on the upper side of the lower case 46.

When the outer cover 43 is rotated in the first direction, the inner cover 44 may prevent external contaminants or contaminated water used to clean the solar panel 45 from flowing into the lower case 46.

The inner cover 44 may be rotatably connected to one side of the lower case 46 to open and close the opening formed on the upper side of the lower case 46. The inner cover 44 may be connected to the lower case 46 by a hinge (not illustrated).

Accordingly, the inner cover 44 may rotate independently from the outer cover 43. The inner cover 44 may rotate in the first direction so that the upper side thereof faces the indoor space.

The rotating shaft of the inner cover 44 may be disposed parallel to the rotating shaft of the outer cover 43. As a result, when the inner cover 44 and the outer cover 43 rotate independently, they may not interfere with or touch each other.

Since the inner cover 44 may be rotated in the first direction, when the upper surface of the inner cover 44 becomes contaminated, the upper surface can be easily cleaned from indoors.

In addition, when the inner cover 44 rotates in the first direction, the internal space of the lower case 46 may be opened, and when the inner cover 44 rotates in the opposite direction, that is, the second direction, the internal space of the lower case 46 may be protected again.

Accordingly, the internal space of the main body 40 may be easily opened and closed, and components inside the main body 40 can be replaced.

Referring to FIG. 6, the rotating shaft of the hinge 421 is disposed in the left-right direction. As a result, the outer cover 43 may rotate in the first direction or the second direction.

A plurality of hinges 421 may be formed. For example, as illustrated in the drawing, the front end of the outer cover 43 and the front end of the inner cover 44 may be connected by the pair of hinges 421 spaced apart from each other in the left-right direction by a predetermined distance. The outer cover 43 may stably rotate the inner cover 44 by the pair of hinges 421.

Meanwhile, unlike the drawing, one hinge 421 may be formed at the center of the front end of the outer cover 43 and the inner cover 44, or three or more hinges 421 may be formed.

The motor 422 may rotate the outer cover 43 to adjust the angle with respect to the inner cover 44. The motor 422 may be mounted on the inner cover 44. The motor 422 may be disposed below the inner cover 44. The motor 422 may be fixed to one side of the lower surface of the inner cover 44.

**In** the inner cover 44, a motor cover 441 that corresponds to the shape of the motor 422 and protrudes upward may be formed. The motor cover 441 may protect the motor 422 from moisture or other substances penetrating into the motor 422 from the upper side of the motor 422. The motor 422 may be mounted below the motor cover 441.

The motor 422 may be connected to a link 423. One end of the link 423 may be connected to the rotating shaft of the motor 422. The other end of the link 423 may be connected to the lower surface of the outer cover 43.

The motor 422 and link 423 may be disposed between the pair of hinges 421. As a result, force generated by the motor 422 may be easily transmitted to the outer cover 43, and the outer cover 43 may stably rotate the inner cover 44.

The link 423 may include a first link 424 and a second link 425. One end of the first link 424 may be fixed to the rotating shaft of the motor 422. The other end of the first link 424 may be connected to one end of the second link 425. The other end of the second link 425 may be fixed to the lower surface of the outer cover 43.

The length of the first link 424 may be equal to or less than the length of the second link 425. Accordingly, even when the first link 424 rotates 360° according to the rotation of the motor 422, the outer cover 43 may not collide or come into contact with the motor 422 or the inner cover 44.

When the motor 422 rotates, force is transmitted to the outer cover 43 by the first link 424 and the second link 425, so that the angle between the outer cover 43 and the inner cover 44 may be changed. The outer cover 43 may rotate in the first direction such that the upper surface thereof faces forward, or rotate in the second direction such that the outer cover 43 covers the upper surface of the inner cover 44, thereby changing its disposed position.

Meanwhile, angle control of the outer cover 43 using the motor 422 may be performed in a state in which the inner cover 44 is disposed on the upper side to protect the internal space of the lower case 46.

In addition, the inner cover 44 may maintain a state of covering and protecting the internal space of the lower case 46 unless an external force is applied due to the weight of the motor 422 fixed to the lower wall.

The main body 40 may include a sensor (not illustrated). The motor 422 and the sensor may be connected to a control unit 67. The sensor may receive the signal transmitted by the user in the indoor space, and the control unit 67 may control the motor 422 according to the signal.

For example, the user in the indoor space may transmit a signal to cause the outer cover 43 to rotate in the first direction to clean the solar panel 45. The sensor may receive the signal and transmit the received signal to the control unit 67, and the control unit 67 may control the motor 422 to cause the outer cover 43 to rotate in the first direction.

For example, the user in the indoor space may transmit a signal to cause the outer cover 43 to rotate in the second direction to restore the position of the outer cover 43. The sensor may receive the signal and transmit the signal to the control unit 67, and the control unit 67 may control the motor 422 to cause the outer cover 43 to rotate in the second direction.

The inner cover 44 may include a link hole 442. The link hole 442 may be a hole through which the link 423 passes through the inner cover 44 according to the rotation of the motor 422. The link hole 442 may be a hole through which at least one of the first link 424 or the second link 425 passes when the outer cover 43 is disposed to cover the upper surface of the inner cover 44.

For example, when the upper surface of the outer cover 43 is rotated in the first direction so that the upper surface faces forward, the link 423 may pass through the link hole 442 and be disposed between the inner cover 44 and the outer cover 43.

For example, when the outer cover 43 rotates in the second direction to cover the upper surface of the inner cover 44, at least a portion of the link 423 may pass through the link hole 442 and be disposed below the inner cover 44.

Therefore, when the outer cover 43 covers the inner cover 44, the link 423 may not come into contact with the inner cover 44 or the outer cover 43, and thus the distance between the inner cover 44 and the outer cover 43 may be reduced.

That is, the volume of the upper case 42 may be reduced through the link hole 442, and the internal space of the lower case 46 may be effectively protected.

The lower surface of the outer cover 43 may include a first curved surface 435. The lower surfaces of the first plate 431 and the second plate 432 may be connected by the first curved surface 435.

The upper surface of the outer cover 43 may be formed by connecting the first plate 431, the second plate 432, and the like at angles to each other to dispose the solar panel 45, whereas the lower surface of the outer cover 43 may include the first curved surface 435 to prevent stress concentration at angled portions.

The upper surface of the inner cover 44 may include a second curved surface 445. The inner cover 44 may include the second curved surface 445 to prevent stress from being concentrated on the angular portion of the inner cover 44 and to improve durability.

The second curved surface 445 may have a shape corresponding to the first curved surface 435. Accordingly, when the outer cover 43 is disposed to cover the upper surface of the inner cover 44, the lower surface of the outer cover 43 may be in close contact with the upper surface of the inner cover 44. Accordingly, the upper case 42 may effectively protect the internal space of the lower case 46 while taking up a small volume.

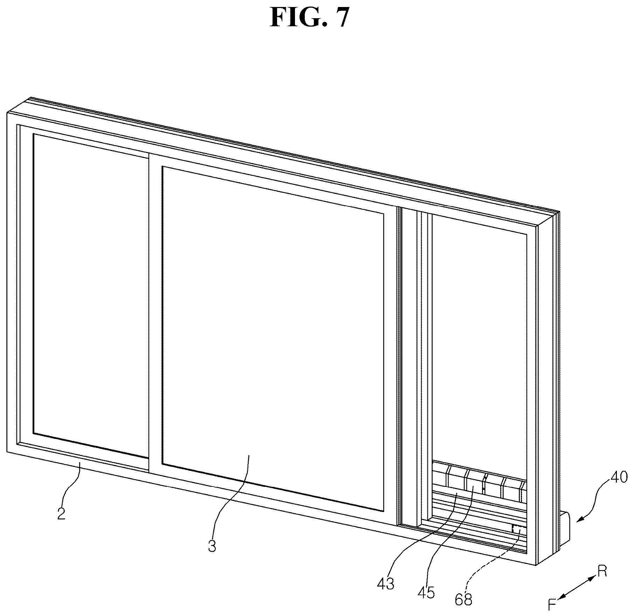

Referring to FIG. 7, the outer cover 43 is illustrated rotated in the first direction so that the upper surface of the outer cover 43 faces forward.

The upper surface of the outer cover 43 is rotated to face forward, so that the user in the indoor space may easily clean the solar panel 45 disposed on the upper surface of the outer cover 43 from indoors.

The display 68 may display the level of contamination of the solar panel 45 measured through the illuminance sensors 433 and 434 (see FIG. 3) whether the outer cover 43 is rotated, or the like.

Meanwhile, in the drawing, the main body 40 is disposed at the bottom of the frame. However, unlike the drawing, the main body 40 may be disposed at various positions of the frame. The user may dispose the main body 40 at an appropriate height considering his/her height and convenience for cleaning.

Therefore, the user may clean the solar panel 45 more conveniently by rotating the upper surface of the outer cover 43 to face forward at an appropriate height.

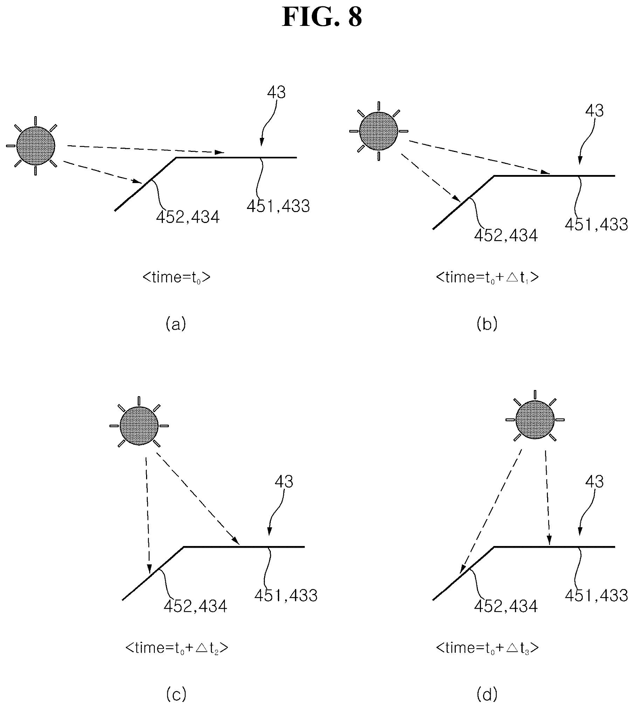

Referring to FIGS. 8A to 9, a method for changing the angle of the outer cover 43 on which the solar panel 45 is disposed in response to changes in the altitude of the sun is described.

Referring to FIGS. 8A to 8D, the change in the altitude of the sun over time is illustrated.

It can be seen that time elapses in the order of FIG. 8A, FIG. 8B, FIG. 8C, and FIG. 8D, and accordingly, the altitude of the sun increases.

It can be seen that as the altitude of the sun changes, the incident angles of the sunlight on the first solar panel 451 and the second solar panel 452 change.

The solar panel 45 may generate electric power more efficiently as the incident angle with the sun approaches 0°. This may be because the amount of light per unit area increases.

When the solar panel 45 includes two panels including the first solar panel 451 and the second solar panel 452, the smaller the difference in intensity of sunlight received by the first solar panel 451 and the second solar panel 452, the more efficiently power may be generated.

Therefore, it may be desirable to rotate the outer cover 43 to minimize the difference in intensity of sunlight received by the first solar panel 451 and the second solar panel 452.

Meanwhile, the intensity of sunlight received by the first solar panel 451 and the second solar panel 452 may be measured by the first illuminance sensor 433 and the second illuminance sensor 434, respectively.

For example, in the case of FIG. 8A, the second solar panel 452 may receive more sunlight than the first solar panel 451, and this difference in sunlight intensity may be measured by the first illuminance sensor 433 and the second illuminance sensor 434.

Therefore, when the outer cover 43 rotates in the second direction (counterclockwise based on this drawing), the solar panel 45 may generate more electric power.

Likewise, in the case of FIG. 8B, the second solar panel 452 may receive more sunlight than the first solar panel 451, and may generate more electric power when the outer cover 43 rotates in the second direction.

In the case of FIG. 8C, the difference in intensity of sunlight received by the first solar panel 451 and the second solar panel 452 is small, so that electric power may be generated efficiently even when the outer cover 43 does not rotate.

In the case of FIG. 8D, the first solar panel 451 may receive more sunlight than the second solar panel 452. Therefore, when the outer cover 43 rotates in the first direction (clockwise based on this drawing), more electric power may be generated.

As described above, due to the structure of the two-stage solar panel 45 and the illuminance sensor disposed on each side, it is possible to continuously determine the direction in which the outer cover 43 should rotate in order to efficiently generate electric power according to changes in the altitude of the sun.

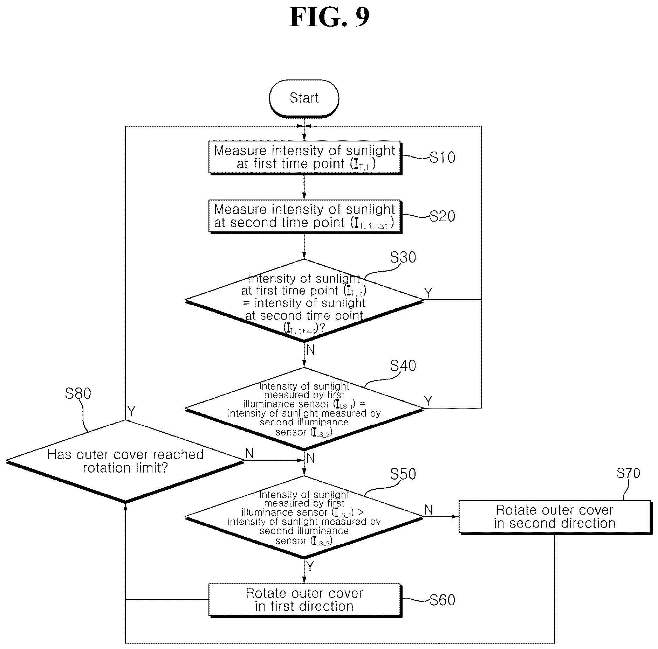

Referring to FIG. 9, the operating method of the outer cover 43 for improving the electric power generation efficiency of the solar panel 45 is described.

I_{T,t} may be the sum of the intensity of sunlight incident on the first solar panel 451 and the intensity of sunlight incident on the second solar panel 452 at a first time point.

I_{T,t+Δt} may be the sum of the intensity of sunlight incident on the first solar panel 451 and the intensity of sunlight incident on the second solar panel 452 at a second time point. The second time point may be a time point after a predetermined time has elapsed from the first time point.

I_{LS_1} may be the intensity of sunlight incident on the first solar panel 451 and the intensity of sunlight measured by the first illuminance sensor 433.

I_{LS_2} may be the intensity of sunlight incident on the second solar panel 452 and the intensity of sunlight measured by the second illuminance sensor 434.

As described above, the solar panel 45 may generate electric power through sunlight. The illuminance sensors 433 and 434 may detect and measure the intensity of sunlight when the sunlight is sensed.

At the first time point, a step (S10) may be performed in which the first illuminance sensor 433 and the second illuminance sensor 434 each measure the intensity of sunlight. At this time, the control unit 67 may store the sum (I_{T,t}) of the intensities of sunlight measured by the first illuminance sensor 433 and the second illuminance sensor 434.

After the step S10, at the second time point after a predetermined time has passed from the first time point, a step (S20) may be performed in which the first illuminance sensor 433 and the second illuminance sensor 434 each measure the intensity of sunlight. In this case, the control unit 67 may store the sum (I_{T,t+Δt}) of the intensities of sunlight measured by the first illuminance sensor 433 and the second illuminance sensor 434.

After the step S20, the control unit 67 may perform a step S30 of comparing the sum (I_{T,t}) of the intensities of sunlight measured at the first time point and the sum (I_{T,t+Δt}) of the intensities of sunlight measured at the second time point.

When the intensity of sunlight measured at the first time point (I_{T,t}) and the intensity of sunlight measured at the second time point (I_{T,t+Δt}) are the same, this may indicate that the change in the altitude of the sun is not large enough to affect electric power generation of the solar panel 45.

**In** this case, the process may return to the beginning to measure the intensity of sunlight at an arbitrary first time point and at a second time point after a predetermined time has elapsed (S10, S20), compare the measured intensities (S30), and determine whether to proceed to the next step.

When the intensity of sunlight measured at the first time point (I_{T,t}) and the intensity of sunlight measured at the second time point (I_{T,t+Δt}) are different, a step (S40) of comparing whether the intensity of sunlight incident on the first solar panel 451 (I_{LS_1}) and the intensity of sunlight incident on the second solar panel 452 (I_{LS_2}) are the same may be performed.

When the intensity of sunlight incident on the first solar panel 451 (I_{LS_1}) is equal to the intensity of sunlight incident on the second solar panel 452 (I_{LS_2}), this may indicate that the first solar panel 451 and the second solar panel 452 receive sunlight equally.

Accordingly, since the electric power can be efficiently generated through the solar panel 45, the angle of the outer cover 43 may not be changed, and the process may return to the beginning to start again from the step (S10, S20) of measuring and comparing the intensity of sunlight at an arbitrary first time point and at a second time point after a predetermined time has elapsed.

Meanwhile, in this drawing, the intensity of sunlight incident on the first solar panel 451 (I_{LS_1}) and the intensity of sunlight incident on the second solar panel 452 (I_{LS_2}) are directly compared, but this may vary depending on the relationship between the total area of the first solar panel 451 disposed on the first plate 431 and the total area of the second solar panel 452 disposed on the second plate 432.

When the intensity of sunlight incident on the first solar panel 451 (I_{LS_1}) is different from the intensity of sunlight incident on the second solar panel 452 (I_{LS_2}), a step (S50) of comparing the intensity of sunlight incident on the first solar panel 451 (I_{LS_1}) and the intensity of sunlight incident on the second solar panel 452 (I_{LS_2}) may be performed.

When the intensity of sunlight incident on the first solar panel 451 (I_{LS_1}) is greater than the intensity of sunlight incident on the second solar panel 452 (I_{LS_2}), a step (S60) of rotating the outer cover 43 by a set angle in the first direction may be performed.

At this time, the incident angle of the sun on the first solar panel 451 decreases, and the incident angle of the sun on the second solar panel 452 increases, so that the first solar panel 451 and the second solar panel 452 may receive sunlight more evenly.

In contrast, when the intensity of sunlight incident on the first solar panel 451 (I_{LS_1}) is less than the intensity of sunlight incident on the second solar panel 452 (I_{LS_2}), a step (S70) of rotating the outer cover 43 by a set angle in the second direction may be performed.

At this time, the incident angle of the sun on the first solar panel 451 increases, and the incident angle of the sun on the second solar panel 452 decreases, so that the first solar panel 451 and the second solar panel 452 may receive sunlight more evenly.

Meanwhile, the set angle may be 5° to 10°. This value is intended to prevent the incident angle of the sun on the solar panel 45 from changing excessively when the outer cover 43 rotates once, and may be adjusted to various values.

After the step S60 or S70, a step (S80) of stopping the rotation of the outer cover 43 may be performed by determining whether the outer cover 43 has reached a limit point at which the outer cover 43 can rotate in the first or second direction.

This may be because the rotation of the outer cover 43 connected to one side of the inner cover 44 is limited within a certain angle range.

When the outer cover 43 reaches the rotation limit, the rotation of the outer cover 43 may be stopped. This may prevent the outer cover 43 or inner cover 44 from being damaged due to excessive stress transmitted from the motor 422.

In this case, the process may return to the beginning and restart from the step (S10, S20) of measuring and comparing the intensity of sunlight at an arbitrary first time point and at a second time point after a predetermined time has elapsed.

When the outer cover 43 has not reached the rotation limit, the intensity of sunlight measured by the first illuminance sensor 433 (I_{LS_1}) and the intensity of sunlight measured by the second illuminance sensor 434 (I_{LS_2}) may be compared (S50), and the step (S60, S70) of rotating the outer cover 43 in the first or second direction may be performed.

This is because, even if the outer cover 43 is rotated by the set angle, there is still a possibility that there will be an imbalance in the amount of sunlight incident on the first solar panel 451 and the second solar panel 452.

As described above, the angle of the outer cover 43 may be controlled according to the intensity of sunlight, and electric power may be efficiently generated through sunlight.

Although the preferred embodiments of the present disclosure have been illustrated and described above, the present disclosure is not limited to the specific embodiments described above, and various modifications may be made by a person having ordinary skill in the art to which the present disclosure pertains without departing from the gist of the present disclosure as claimed in the claims, and such modifications should not be understood individually from the technical idea or prospect of the present disclosure.

## Claims

1. A window cleaning apparatus (1) comprising:
a cleaning module (60) configured to clean a window;
a lower case (46) accommodating the cleaning module (60) and having an opening formed at an upper side thereof;
an upper case (42) including an inner cover (44) disposed above the lower case (46) to cover the opening, and an outer cover (43) disposed above the inner cover (44) to cover the inner cover (44); and
a solar panel (45) disposed on an upper surface of the outer cover (43) and configured to generate electric power using sunlight,
wherein the outer cover (43) is rotatably connected to one side of the inner cover (44).

2. The window cleaning apparatus (1) of claim 1, wherein the outer cover (43) is connected to one side of the inner cover (44) so as to be rotatable between a first position in which the outer cover (43) covers the inner cover (44) and a second position in which an upper surface of the solar panel (45) is disposed to face an indoor space at a front side.

3. The window cleaning apparatus (1) of claim 2, further comprising:
a motor (422) mounted on the inner cover (44); and
a link (423) having one end connected to a rotating shaft of the motor (422) and the other end connected to a lower surface of the outer cover (43),
wherein the outer cover (43) rotates between the first position and the second position in accordance with the rotation of the motor (422).

4. The window cleaning apparatus (1) of claim 2 or 3, wherein a front end of the outer cover (43) is connected to a front end of the inner cover (44) by a pair of hinges (421), and
the pair of hinges (421) are spaced apart from each other in a left-right direction by a predetermined distance.

5. The window cleaning apparatus (1) of claims 3 and 4, wherein the motor (422) and the link (423) are disposed between the pair of hinges (421).

6. The window cleaning apparatus (1) of any one of claims 1 to 5, comprising:
a or the motor (422) mounted on the inner cover (44);
a or the link (423) having one end connected to a or the rotating shaft of the motor (422) and the other end connected to a or the lower surface of the outer cover (43);
a sensor configured to receive a signal transmitted from a user in an indoor space; and
a control unit (67) electrically connected to the sensor and the motor (422),
wherein the control unit (67) controls an operation of the motor (422) in response to the signal received from the sensor.

7. The window cleaning apparatus (1) of any one of claims 1 to 6, comprising:
a or the motor (422) mounted on the inner cover (44);
a first link (424) fixed to a rotating shaft of the motor (422); and
a second link (425) rotatably connected to the first link (424) and fixed to a lower surface of the outer cover (43).

8. The window cleaning apparatus (1) of claim 7, wherein a length of the first link (424) is equal to or less than a length of the second link (425).

9. The window cleaning apparatus (1) of claim 7 or 8, wherein the inner cover (44) forms a link hole (442) through which at least one of the first link (424) or the second link (425) passes when the outer cover (43) is disposed to cover an upper surface of the inner cover (44).

10. The window cleaning apparatus (1) of any one of claims 7 to 9, wherein the inner cover (44) forms a motor cover (441) that protrudes upward to correspond to a shape of the motor (422), and
the motor (422) is mounted below the motor cover (441).

11. The window cleaning apparatus (1) of any one of claims 1 to 10, wherein the inner cover (44) is rotatably connected to one side of the lower case (46) so that the opening of the lower case (46) is opened and closed.

12. The window cleaning apparatus (1) of claim 11, wherein a rotating shaft of the inner cover (44) is disposed parallel to a rotating shaft of the outer cover (43).

13. The window cleaning apparatus (1) of any one of claims 1 to 12, wherein a lower surface of the outer cover (43) forms a curved surface (435),
an upper surface of the inner cover (44) forms a curved surface (445) corresponding to the lower surface, and
the lower surface of the outer cover (43) is in close contact with the upper surface of the inner cover (44) when the outer cover (43) is disposed to cover the upper surface of the inner cover (44).

14. The window cleaning apparatus (1) of any one of claims 1 to 13, comprising:
a or the motor (422) for rotating the outer cover (43); and
an illuminance sensor (433, 434) disposed on one side of the solar panel (45) and configured to measure a level of contamination of the solar panel (45) through an intensity of sunlight.

15. The window cleaning apparatus (1) of claim 14, further comprising a display (68) disposed on a front surface of the lower case (46) and configured to display the level of contamination of the solar panel (45).
